Europäisches Patentamt

(19) European Patent Office

Office européen des brevets

(11) Publication number: **0 338 143 B1**

## (12) EUROPEAN PATENT SPECIFICATION

(45) Date of publication of patent specification:
04.09.91 Bulletin 91/36

(21) Application number: **88303484.5**

(22) Date of filing: **18.04.88**

(51) Int. Cl.⁵: **B08B 1/04, B23G 7/00, B08B 9/02**

(54) **Apparatus for cleaning a screw-jack type support device.**

(43) Date of publication of application:
25.10.89 Bulletin 89/43

(45) Publication of the grant of the patent:
04.09.91 Bulletin 91/36

(84) Designated Contracting States:
**DE FR GB IT NL**

(56) References cited:
CH-A- 257 471
FR-A- 532 001
FR-A- 2 045 155

(73) Proprietor: **NISSO SANGYO CO LTD**
**1-10-1 Kakigara-cho**
**Nihonbashi Chuo-ku Tokyo (JP)**

(72) Inventor: **Enoki, Takahiro**
**2045-12 Horiuchi Hayama**
**Miura Kanagawa (JP)**
Inventor: **Masuda, Akira**
**815 Shinmatsudo-haitsu 743**
**Ohyaguchi Matsudo-shi Chiba (JP)**

(74) Representative: **Pilch, Adam John Michael et al**
**D. YOUNG & CO. 10 Staple Inn**
**London WC1V 7RD (GB)**

## Description

The present invention relates to an apparatus for use in cleaning a screw-jack type support device for supporting the lower portion of a scaffolding tube or a tubular support used in building construction, ship building or other construction work.

Generally, in building construction, ship building or other construction work, it is customary to use a screw-jack type support device for adjusting the height and/or length of a scaffolding tube or tubular support. The screw-jack support device includes a screw-threaded bolt mounted centrally on a base plate and extending at a right angle thereto, and a nut mounted on the screw-threaded bolt for movement therealong and which is provided with a pair of radially outwardly extending drive pins. However, in a working site where concrete is poured, there is a problem in that the poured concrete may overflow or leak from a shuttering or moulding framework and flow downwardly along the scaffolding tube or tublar support to the screw-jack device and the concrete sets hard on the screw-threaded bolt of the screw-jack device. This adhered and hardened concrete prevents the nut from being moved along the screw-threaded bolt, thus making the screw-jack device unworkable. Consequently, it is a conventional practice to remove the hardened concrete from the screw-threaded bolt manually with the aid of a wire brush or an electric powered wire brush, which is very laborious and time consuming.

The object of the present invention is to provide an apparatus for cleaning a screw-jack type support device mechanically and automatically, and which is labour-saving.

According to the present invention there is provided apparatus for cleaning a screw-jack type support device having a screw-threaded bolt, a nut provided with a pair of drive pins, and a base plate, comprising :

a support structure,
a rail supported by said structure ;
a piston and cylinder device extending longitudinally of said rail ;
a carriage mounted on said rail via a plurality of rollers for movement therealong ;
a connecting member connecting said carriage to said piston and cylinder device ;
an arm disposed on said carriage and extending perpendicularly to said rail ;
a tube rotatably supported on said support structure for receiving the screw bolt of the screw-jack device ;
a socket formed at one end of said tube for receiving the nut of the screw-jack device ; and
a motor for rotating said tube.

In use, the screw-threaded bolt of the jack device is inserted in the tube, while the nut and drive pins thereof are secured to the socket. The base plate of the jack device is supported by the arm. In this condition, when the tube is rotated by the motor, the nut also is rotated in the same direction so that the screw-threaded bolt is moved along the tube. As a result, the concrete adhering to the peripheral surface of the screw-threaded bolt is cracked and removed due to friction with the nut. The cylinder serves to normally urge the screw-threaded bolt towards the tube.

An embodiment of the present invention will now be described, by way of example, with reference to the drawings, in which :

Figure 1 is a front elevational view of a cleaning apparatus embodying the present invention ;

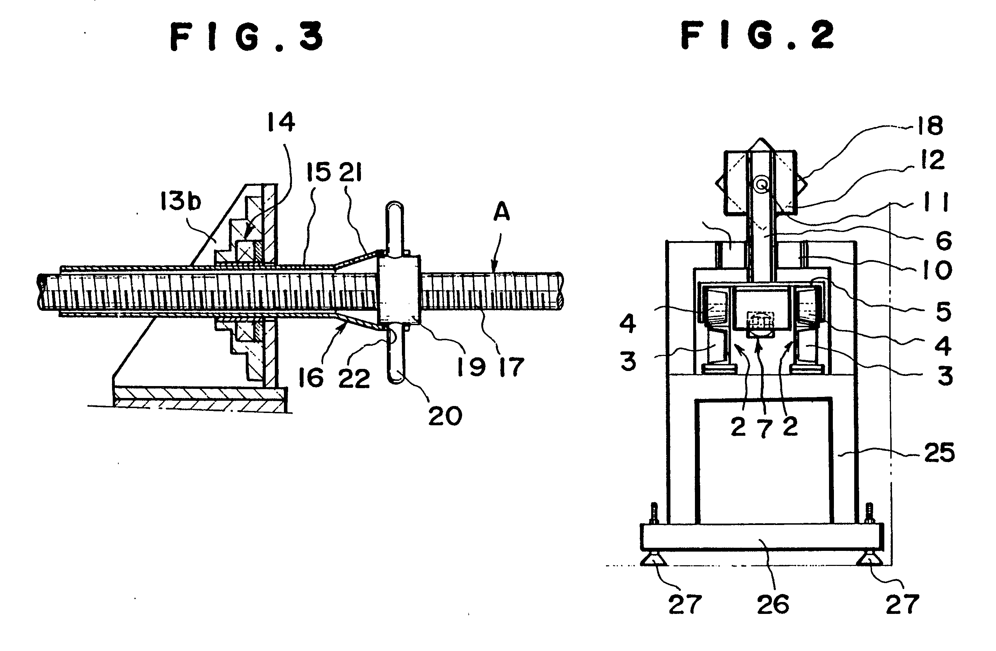

Figure 2 is an end view of Figure 1 ; and
Figure 3 is a fragmentary, enlarged cross-sectional view of a tube of the apparatus shown in Figure 1.

The apparatus has a pair of rails 2 horizontally supported on a pair of supports 1, each support 1 including legs 25, a reinforcing base member 26 and feet or pads 27. Each of the rails 2 forms on its front or rear side a track 3. A pair of rollers 4 are movable along the respective tracks 3, and they are connected to a carriage 5 so that the carriage 5 is movable along the rails 2 as the rollers 4 roll along tracks 3.

A pneumatic or hydraulic piston and cylinder device 7 is disposed between the rails 2 and extends in the longitudinal direction of the two rails 2 and has a piston rod 8 connected to the carriage 5 via a connector member 9. In response to expansion and contraction of the piston and cylinder device 7, the carriage 5 is movable along the rails 2.

The carriage 5 has an arm 6 extending perpendicularly to the rails 2 and ; as the carriage 5 moves along the rails 2, the arm 6 moves in and along a space defined by a pair of guide frames 10 attached to the rails 2. A support plate 12 is fixedly secured to one end of the arm 6 by means of a bolt 11 and has at its corners a claw 12a. A pair of brackets 13a, are mounted on the rails 2, and to the brackets 13a, 13b, a tube 15 is rotatably mounted via a bearing 14 for receiving a screw-threaded bolt 17 of a screw-jack type support device A to be cleaned. The axis of the tube 15 is in alignment with the centre of the support plate 12 secured to the arm 6.

A socket 16 is formed on one end of the tube 15, and has a bore 21 of a diameter corresponding to the outside diameter of a nut 19 (described below) of the device A ; there being a pair of diametrically opposed cut-outs 22 in the socket 16 communicating with the bore 21.

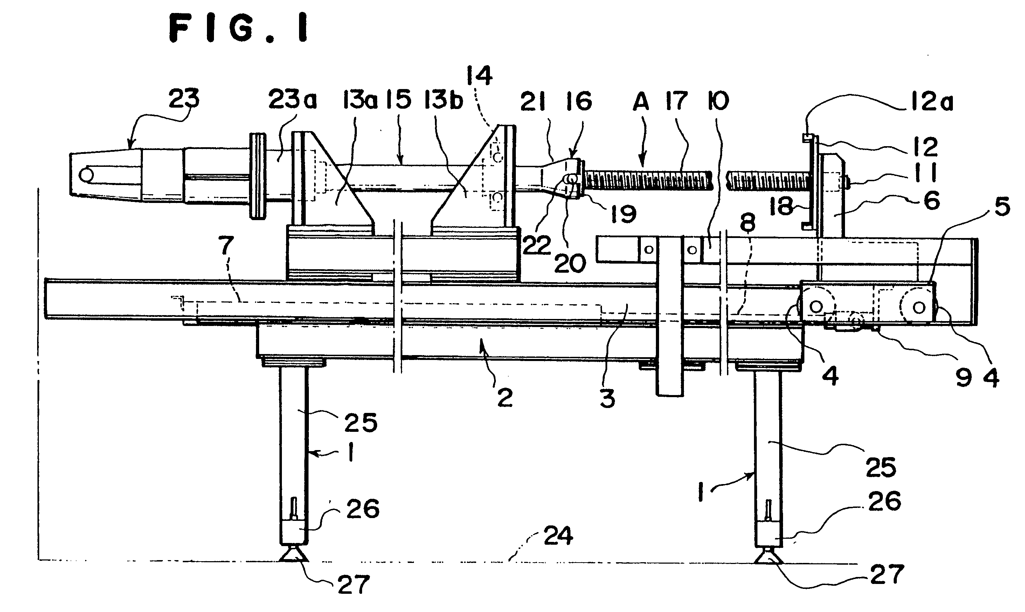

A motor 23, such as an impact wrench used as a drive means, is fixedly mounted on the supports 1. The tube 15 is connected at one end (the left hand end in Figure 1) to the output shaft of the motor 23 by means of a coupling 23a. As the motor 23 is rotated in one or the other direction, the tube 15 is rotated in the same direction.

In use, the cleaning apparatus may be mounted on the ground or on a floor 24 via the supports 1.

The mode of operation of the cleaning apparatus is as follows :

By expanding the piston and cylinder device 7 to push the arm 6, the head of the screw bolt 17 (of the screw-jack device A) on which concrete is attached and which prevents the nut 19 from moving therealong is inserted in the tube 15, and the nut 19 is received in the bore 21 of the socket 16 with the drive pins 20 of the nut 19 received in the respective cutouts 22. Then the base plate 18 of the screw-jack device A located at the end of the screw-threaded bolt 17 is abutted against the support plate 12 and is locked against rotation by means of the locking claws 12a.

Then the screw-threaded bolt 17 is urged toward the tube 15 by contraction of the piston and cylinder 7, in which condition as the motor 23 is rotated in one direction the tube 15 is rotated in the same direction. This rotation of the tube 15 causes forced rotation of the nut 19 via the drive pins 20 received in the cut-outs 22 of the tube 15. As a result, the concrete adhering to the peripheral surface of the screw-threaded bolt 17 is cracked and removed due to friction with the nut 19 as the screw-threaded bolt 17 is moved into the tube 15.

The removed concrete which falls into the tube 15 is discharged to the exterior via an opening (not shown) near the coupling 23a.

In the event that the nut 19 to be forcibly rotated is disposed near the base plate 18, the top end portion of the screw-threaded bolt 17 is inserted in the tube 15, and the motor 23 is rotated in the reverse direction. This reverse rotation of the tube 15 causes forced reverse rotation of the nut 19. As a result, the concrete attached to the peripheral surface of the screw-threaded bolt 17 is cracked and removed due to friction with the nut 19 as the screw bolt 17 is moved to the right as viewed in Figure 1.

With the cleaning apparatus of the present invention, since concrete attached to the peripheral surface of the screw-threaded bolt 17 can be removed simply by inserting the screw-threaded bolt 17 and the nut 19 in the tube 15 and by rotating the tube 15 by means of the motor 23, cleaning of the jack device A can be performed mechanically and automatically, thus providing an efficient and labour-saving and hence cost-saving cleaning apparatus.

## Claims

1. An apparatus for cleaning a screw-jack type support device (A) having a screw-threaded bolt (17), a nut (19) provided with a pair of drive pins (20), and a base plate (18), comprising :

a support structure (1),
rails (2) supported by said structure (1) ;
a piston and cylinder device (7) extending longitudinally of said rail (2) ;
a carriage (5) mounted on said rails (2) via a plurality of rollers (4) for movement therealong ;
a connecting member (9) connecting said carriage (5) to said piston and cylinder device (7) ;
an arm (6) disposed on said carriage (5) and extending perpendicularly to said rail (2) ;
a tube (15) rotatably supported on said support structure (1) for receiving the screw bolt (17) of the screw-jack device (A) ;
a socket (16) formed at one end of said tube (15) for receiving the nut (19) of the screw-jack device (A) ; and
a motor (23) for rotating said tube (15).

2. Apparatus as claimed in claim 1, in which said socket (16) has a bore (21) for receiving the nut (19), and a pair of diametrically opposed cut-outs (22) communicating with said bore (21) for receiving the drive pins (20) of the nut (19).

## Patentansprüche

1. Reinigungsgerät für eine Stützeinrichtung (A) nach Art eines Wagenhebers, die einen Schraubgewindebolzen (17), eine Mutter (19), welche mit einem Paar von Antriebszapfen (20) versehen ist, und eine Grundplatte (18) hat, mit :
einem Stützafbau (1),
Schienen (2), welche von diesem Aufbau (1) getragen werden,
einer Kolben/Zylindervorrichtung (7), welche sich entlang der Schienen (2) erstreckt,
einem Schlitten (5), welcher auf den Schienen über eine Mehrzahl von Rollen (4) angebracht ist für eine Bewegung entlang jener,
einem Verbindungsteil (9), welches den Schlitten (5) mit der Kolben/Zylindereinrichtung (7) verbindet,
einem Arm (6), der an dem Schlitten (5) angeordnet ist und sich quer zu den Schienen (2) erstreckt,
einem Rohr (15), welches drehbar an dem Stützaufbau (1) gehaltert ist, um den Schraubbolzen (17) der Wagenhebereinrichtung (A) aufzunehmen,
einer Hülse (16), welche an einem Ende des Rohres (15) ausgebildet ist, um die Mutter (19) der Wagenhebereinrichtung (A) aufzunehmen,
und einem Motor (23), um das Rohr (15) zu drehen.

2. Vorrichtung nach Anspruch 1, bei welcher die Hülse (16) eine Bohrung (21) für die Aufnahme der Mutter (19) hat, sowie ein Paar von diametral gegenüberliegenden Ausschnitten (22), welche mit der Bohrung (21) in Verbindung stehen, um die Antriebszapfen (20) der Mutter (19) aufzunehmen.

## Revendications

1. Dispositif de nettoyage pour un support du type cric à vis (A) comportant un boulon fileté (17), un écrou (19) doté d'une paire de tiges d'entraînement (20), et une plaque d'assise (18), comprenant :
une structure de support (1),
des rails (2) supportés par ladite structure (1) ;
un ensemble piston et cylindre (7) s'étendant longitudinalement auxdits rails (2) ;
un chariot (5) monté sur lesdits rails (2) par l'intermédiaire d'une pluralité de rouleaux (4) pour se déplacer le long des rails ;
un organe de couplage (9) reliant ledit chariot (5) audit ensemble piston et cylindre (7) ;
un bras (6) disposé sur ledit chariot (5) et s'étendant perpendiculairement auxdits rails (2) ;
un tube (15) supporté à rotation sur ladite structure de support (1) pour recevoir le boulon fileté (17) du cric à vis (A) ;
une douille (16) formée à une extrémité dudit tube (15) pour recevoir l'écrou (19) du cric à vis (A) ; et
un moteur (23) pour faire tourner ledit tube (15).

2. Dispositif selon la revendication 1, dans lequel ladite douille (16) comporte un alésage (21) pour recevoir l'écrou (19), et une paire de découpes (22) diamétralement opposées communiquant avec ledit alésage (21) pour recevoir les tiges d'entraînement (20) de l'écrou (19).

FIG. 1

# FIG.3

14

13b 15 21

16 22 20 19 17 A

# FIG.2

18
12
11
6
10
5
4
3

4
3

2 7 2

25

27 26 27

EP 0 338 143 B1